# EUROPEAN PATENT SPECIFICATION

(11) **EP 2 850 109 B1**
(45) Date of publication and mention of the grant of the patent: **16.08.2017**
(21) Application number: 13720435.0
(22) Date of filing: 15.04.2013
(51) Int. Cl.: C08B 37/00, D21C 9/00

(54) **METHOD OF SEPARATION OF HEMICELLULOSE AND CELLULOSE FROM POLYSACCHARIDE SOURCES**
VERFAHREN ZUR TRENNUNG VON HEMICELLULOSE UND CELLULOSE AUS POLYSACCHARIDQUELLEN
PROCÉDÉ DE SÉPARATION D'HÉMICELLULOSE ET DE CELLULOSE À PARTIR DE SOURCES DE POLYSACCHARIDE

(30) Priority: 14.05.2012 US 201261646383 P
(43) Date of publication of application: 25.03.2015
(73) Proprietor: Metsä Fibre Oy, 02020 Metsä (FI)
(72) Inventor: SIXTA, Herbert, FI-00076 Aalto (FI); HUMMEL, Michael, FI-00076 Aalto (FI); IAKOVLEV, Mikhail, Atlanta GA 30309 (US); TOLONEN, Lasse, 00100 Helsinki (FI)
(74) Representative: Seppo Laine Oy
(86) International application number: PCT/FI2013/050414
(87) International publication number: WO 2013/171364

(56) References cited:
- WO-A1-99/47733
- WO-A1-2007/111605
- WO-A1-2008/095252
- US-A1- 2004 108 085

## Description

### Field of Invention

The invention relates to the separation of hemicellulose and cellulose from polysaccharide sources. In particular, the present invention relates to methods of separating hemicelluloses and cellulose from hemicellulose-rich source, such as a pulp of any origin or from holocellulose by dissolution in suitable solvents.

### Background

Dissolving pulp refers to pulp of high cellulose content which is used as raw material for the manufacture of cellulose derivatives and regenerated cellulose products. The wood-derived dissolving pulps which account for about 85% of the total dissolving pulp market are produced according to the acid sulphite and prehydrolysis-kraft (PHK) processes. In both cases additional purification steps such as hot and cold caustic extractions are necessary to achieve the requested degree of purification (determined as the content of residual hemicelluloses and alkali resistance). The removal of the hemicelluloses is associated with severe losses of cellulose mainly due to peeling-off reactions. Cellulose losses comprise between 15 and more than 30 wt-% depending on the process and the degree of purification. The removed hemicelluloses are largely converted to low molar mass hydroxy acids owing to alkaline post-extraction processes which constitutes another drawback of the current technologies. Cotton linters account for the residual 15% of the dissolving pulp market and represent the dissolving pulp of highest cellulose purity. They are particularly used for the production of acetate plastics and high-DP cellulose ethers.

Contrary to the paper pulp market, the dissolving pulp market shows a consistent annual growth of about 5% since the last ten years after the man-made cellulose fiber industry was consolidated during the 1990s. This growth is largely caused by the installation of new viscose fiber capacities in Asia but more and more also due to novel cellulose-based products requiring high purity dissolving pulps. At the same time the availability of cotton linters does not keep up with the increasing demand for several reasons.

It has been estimated that the annual demand of dissolving pulp will increase from currently 5-6 Mio t to about 12-20 Mio t in 2050, at least. This clearly underlines the need for novel environmentally friendly and economically attractive manufacturing processes for dissolving pulps of high purity which allow the concomitant recovery of hemicelluloses in high yield and purity.

### Summary of Invention

It is an aim of the present invention, to provide a means for selectively and (almost) quantitatively dissolved hemicelluloses from a hemicellulose-rich pulp of any origin as well as from holocellulose in an ionic liquid of which the solvent basicity and acidity are adequately adjusted by the addition of a co-solvent.

The solvent basicity and acidity are characterized by the Kamlet-Taft (KT) solubility parameters, primarily the β- (H-bond basicity) and α- (H-bond acidity) values, respectively.

Thus, the present invention concerns a method for separation of hemicellulose and cellulose by dissolution of hemicellulose from a hemicellulose-rich pulp of any origin or from holocellulose.

In the present method hemicellulose is dissolved in a solvent system comprising a cellulose solvent, which is either a ionic liquid or another direct cellulose solvent, and a molecular solvent (co-solvent), wherein said co-solvent does not dissolve cellulose, and wherein the solvent basicity and acidity of said ionic liquid or other direct cellulose solvent are adequately adjusted by the co-solvent.

In an other aspect, this invention concerns a method for separation of hemicellulose and cellulose by dissolution of hemicellulose from a hemicellulose-rich pulp of any origin or from holocellulose, wherein hemicellulose is dissolved in a solvent system comprising a ionic liquid and a molecular solvent (co-solvent), wherein said co-solvent does not dissolve cellulose and wherein the solvent basicity and acidity of said ionic liquid are adequately adjusted by the co-solvent.

More specifically, the present method is mainly characterized by what is stated in the characterizing part of claim 1.

### Advantages

The present invention enables quantitative separation of cellulose and hemicellulose without any depolymerization and yield losses as occurring during conventional dissolving pulp manufacturing processes. The invention facilitates the integration of pulp refining into a cellulose regeneration process (IONCELL).Hemicelluloses are dissolved by a solvent system with adjusted solubility parameters instead of being fragmented by acid- or alkaline catalyzed degradation routes (acid sulfite process combined with hot caustic extraction or prehydrolysis kraft pulping with our without post-alkaline extraction).

Some important advantages are:
(a) Simple process, low energy consumption: dissolution treatment at slightly elevated temperature in a solvent system which is equally suited for cellulose, cellulose + hemicellulose or only hemicellulose dissolution. In this way this invention can be expanded to cellulose regeneration processes.
(b) No yield losses of both hemicellulose and cellulose: at the same level of cellulose purity, conventional prehydrolysis-kraft process experiences 5 to 10 % cellulose yield loss on oven dry wood depending on the wood source and extent of cellulose purity. The same applies to the acid sulfite pulping process. Polymeric hemicelluloses cannot be recovered at all with the existing dissolving pulp manufacturing processes. However, the acid sulfite process allows to separate the dissolved monosugars from the sulfite spent liquor (SSL).
c) The invention suggests the use of a cellulose solvent which can be also utilized in a conversion process, e.g. the cellulose regeneration process. This allows the combination of the pulp refining process (invention) with a fiber or film forming process using the dry-wet regeneration concept as suggested for the IONCELL process as mentioned above.

### Brief Description of Drawings

**Figure 1:** Simplified scheme of fractionating a hemi-rich pulp into cellulose and hemicellulose fractions;
**Figure 2****:** Cationic moieties of ionic liquids suitable of pulp dissolution;
**Figure 3****:** Net basicity, (β-α), versus basicity (β) of [emim] [OAc] mixed with increasing amount of co-solvent. The co-solvent is water. The Kamlet-Taft (KT) parameters have been determined at room temperature;
**Figure 4****:** Glucan and xylan yields in the solid residue as a function of the water content. The results are expressed a wt-% on the amounts of glucan and xylan in the initial pulp;

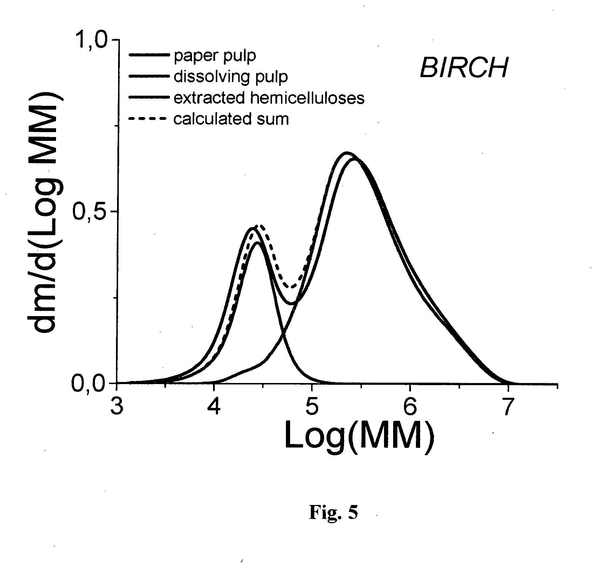

**Figure 5****:** Molar mass distribution of the initial bleached birch kraft pulp, the pulp residue (dissolving pulp, i.e. pure cellulose), the precipitate (extracted pure hemicellulose) and the calculated sum of the fractions. The treatment was carried out in [emim] [OAc]-water with 15 wt-% water at 60°C for 3 h;
**Figure 6****:** Molar mass distribution of the initial bleached pine kraft pulp, the pulp residue (dissolving pulp, i.e. cellulose), the precipitate (hemicellulose) and the calculated sum of the fractions. The treatment was carried out with [emim][OAc]-water with 15 wt-% water at 60°C for 3 h.

### Description of Embodiments

As discussed above, the present technology provides a novel way of separating hemicellulose and cellulose by dissolution of hemicellulose from a hemicellulose-rich source in a solvent system comprising a cellulose solvent, which is either a ionic liquid or another direct cellulose solvent, together with a molecular solvent (co-solvent). The co-solvent is selected such that it does not dissolve cellulose. The solvent basicity and acidity of said ionic liquid or other direct cellulose solvent are adequately adjusted by the co-solvent.

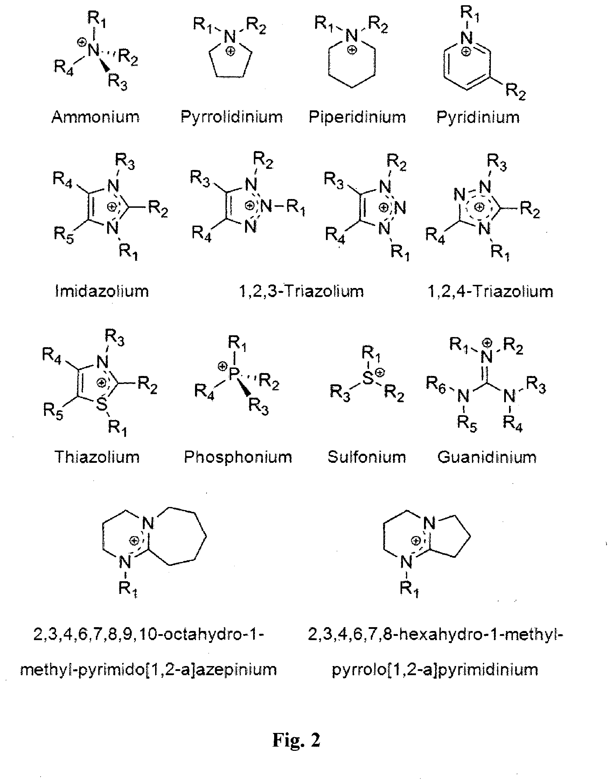

The solvent basicity and acidity are characterized by the Kamlet-Taft solubility parameters, particularly by the β- (H-bond basicity) and α- (H-bond acidity) values.
To give some specific examples of preferred embodiment, in a first embodiment, the ionic liquid is a direct cellulose solvent, which has a cation selected from the group of cationic moieties depicted in Figure 2, wherein the residues R₁₋₅ are independently linear or branched alkyl- (typically C1-C6), alkoxy-, or alkoxyalkyl groups, residues containing aryl moieties, or hydrogen, and an anion selected from the group consisting of halides (fluoride, chloride, bromide and iodide), pseudohalides (cyanide, thiocyanide, cyanate), carboxylates (formate, acetate, propionate, butyrate), alkyl sulphite, alkyl sulphate, trifluoromethane sulfonate, phenyl sulfonate, dialkyl phosphite, dialkyl phosphate, dialkyl phosphonites, and dialkyl phosphonates.

In a preferred embodiment, the ionic solvent has a net basicity (β-α) in the range 0.11-0.47; and a β-value in the range 0.57-0.95; preferably a net basicity (β-α) in the range 0.24-0.39; and a β-value in the range 0.70-0.88.

In the present technology, the ionic liquid can also be replaced by NMMO.H2O or LiCl/DMAc.

The co-solvent is preferably miscible with the ionic liquid. In particular, the co-solvent is capable of lowering the β-value and/or raising the α-value of the solvent system.

Preferably, the co-solvent is selected from the group consisting of water, methanol, ethanol, propanol, iso-propanol, butanol, acetone, acetonitrile, dimethylsulfoxide, dimethylformamide, dimethylacetamide and dimethylimidazolidione, preferably the co-solvent is water or ethanol.

In one particular embodiment, the co-solvent comprises another ionic liquid which itself is not capable of dissolving cellulose, so that this co-solvent-IL -mixture consists of an aforementioned cation and any anion not mentioned above, preferably of the type hexafluorophosphate, tetrafluoroborate, bis(trifluoromethane)sulfonimide.

Preferably, the ionic liquid is an [emim]-based ionic liquid.

Specific examples of ionic liquid are the following: [emim][OAc], [bmim][OAc], [emim][DMP] and [DEP], [DBNH][OAc], [DBNH][EtOAc], preferably [emim]OAc and [emim][DMP].

The co-solvent (to be combined with any of the above ionic liquids is water or an alcohol, preferably water, wherein the water content preferably is in the range 10-30 wt-%, and the solvent has a net basicity (β-α) in the range 0.11-0.47; and a β-value in the range 0.57-0.95; preferably a net basicity (β-α) in the range 0.24-0.39; and a β-value in the range 0.70-0.88.

The present method can be carried out, for example, at a temperature ranging from 20-150 °C, preferably 40-80 °C for a time ranging from 10-400 min, preferably 60-180 min.

Pulp consistency can vary within broad ranges, typically being about 1-25 wt-%, preferably 5-15 wt-%.

The hemicellulose-rich pulp used as starting material can be any bleached or unbleached paper pulp of any lignocellulosic raw material derived from any commercial (sulphite, kraft, Soda-AQ) or non-commercial processes, such as organosolv, carboxylic acid, ASAM, ASA or MEA, although these examples are not exhaustive.

The dissolved hemicellulose fraction can be regenerated by the addition of a non-solvent, preferably water or alcohol, and the precipitate is separated by filtration or centrifugation.

In a further embodiment, the dissolved hemicellulose fraction is separated by pressure driven membrane processes, and/or a non-solvent is added to the hemicellulose-enriched retentate to initiate precipitation of the hemicellulose, and the hemicellulose is recovered as a pure powder after washing and drying.

Based on the above embodiments, a cellulose product can be obtained which has a residual hemicellulose content of 1.0 to 10 wt-%, preferably between 2.0 and 5.0 wt-%, and the isolated and purified hemicellulose has a residual cellulose content between 1.0 and 10 wt-%, preferably between 2.0 and 5 wt-%.
Typically, the cellulose and hemicellulose contents are calculated by the Janson formulae, and the neutral sugar contents are determined by HPAEC-PAD as described in reference [10].

The cellulose-rich residue can, for example, be dissolved in a cellulose solvent as mentioned above.

Modifications of the above methods are possible. Thus, for example oxidants or acids can be added to the cellulose dope to adjust the degree of polymerization suitable for the subsequent forming and regeneration processes. The amount of such oxidants or acids is typically 0.001 to 10 % by weight of the total composition.

The oxidants added to the cellulose dope can be selected so as to be capable of removing chromophores such as residual lignin, HexA and extractives prior to the conversion processes.

The treated cellulose dope is subjected to filtration to remove undissolved impurities.

Turning now to the drawings, it can be noted that Figure 1 shows a simplified scheme of the fractionation process. Thus, in the scheme, pulp was treated with a solvent system in a vertical kneader (or a stirrer at smaller scale) at various temperatures (60-80 °C) and retention times (0.5-6 h). The solvent system consisted of an [emim][OAc]-water mixture with a water content ranging between 10 wt-% and 30 wt-%. The resulting suspension was filtered (separated) with a press filter (or a centrifuge). The dissolved xylan was precipitated by further addition of water (non-solvent). The washed and dried cellulose and xylan fractions were analysed.

The solvent systems typically comprise an ionic liquid and a molecular solvent of which the latter is usually used in minor parts and, thus, can be stripped off easily to regenerate the ionic liquid. The herein presented concept is valid for all ionic liquids that were reported as cellulose solvents. This comprises in particular ionic liquids with cationic moieties such as depicted in Figure 2. The residues R₁₋₅ are independently linear or branched alkyl- (typically C₁-C₆), alkoxy-, or alkoxyalkyl groups, residues containing aryl moieties, or hydrogen.
The preferred anions of the ionic liquids are halides (fluoride, chloride, bromide and iodide), pseudohalides (cyanide, thiocyanide, cyanate), carboxylates (formate, acetate, propionate, butyrate), alkyl sulphite, alkyl sulphate, trifluoromethane sulfonate, phenyl sulfonate, dialkyl phosphite, dialkyl phosphate, dialkyl phosphonites, dialkyl phosphonates (Fig. 2). Thus, the resulting ionic liquid is hydrophilic and its Kamlet-Taft basicity and net-basicity suitable for cellulose dissolution [7].

To generate a solvent system that allows aforementioned fractionation of holocellulose, the ionic liquid is mixed with a co-solvent. Any solvent that does not dissolve cellulose itself can be utilized as co-solvent to generate a selective solvent system. Preferred co-solvents are miscible with the respective ionic liquid and lower the β value (and/or raising the α value, respectively) of the resultant solvent mixture. Preferably, the co-solvent is water, methanol, ethanol, propanol, iso-propanol, butanol, acetone, acetonitrile, dimethylsulfoxide, dimethylformamide, dimethylacetamide, dimethylimidazolidione. The co-solvent can also comprise another ionic liquid which itself is not capable of dissolving cellulose. This co-solvent-IL consists of an aforementioned cation and and any anion not mentioned above, preferably of the type hexafluorophosphate, tetrafluoroborate, bis(trifluoromethane)sulfonimide. For environmental and energy saving reasons, water and ethanol are used more preferably.

In addition to ionic liquids also other direct cellulose solvents, preferably NMMO.H₂O and LiC1/DMAc, are suitable for the selective dissolution of low molar mass polysaccharides such as hemicelluloses or low molar mass cellulose from a hemicellulose-rich pulp when mixed with a co-solvent - as listed above - in a ratio so that the targeted solvent parameters (net basicity, β value) are adequately adjusted.

The Kamlet-Taft (KT) parameters have been proven to be useful solvent property indicators [1]. They are determined from the absorption peaks of the three dyes Reichardt's dye (RD, range 518-585 nm), *N,N-*diethyl-4-nitro-aniline (DENA, 402-414 nm) and 4-nitroaniline (NA, 406-398 nm). The peaks are typically fitted to a Gaussian function in order to precisely locate the maxima (vₘₐₓ). From these functions vₘₐₓ(T), the E*_{T}*(30), π*, α and β parameters are calculated using published equations [2].

Several authors have demonstrated that the H-bond basicity, expressed by the β-value, correlates with the capability of an ionic liquid to dissolve cellulose [2-6]. Other KT values were not found to correlate directly with the dissolution of cellulose.

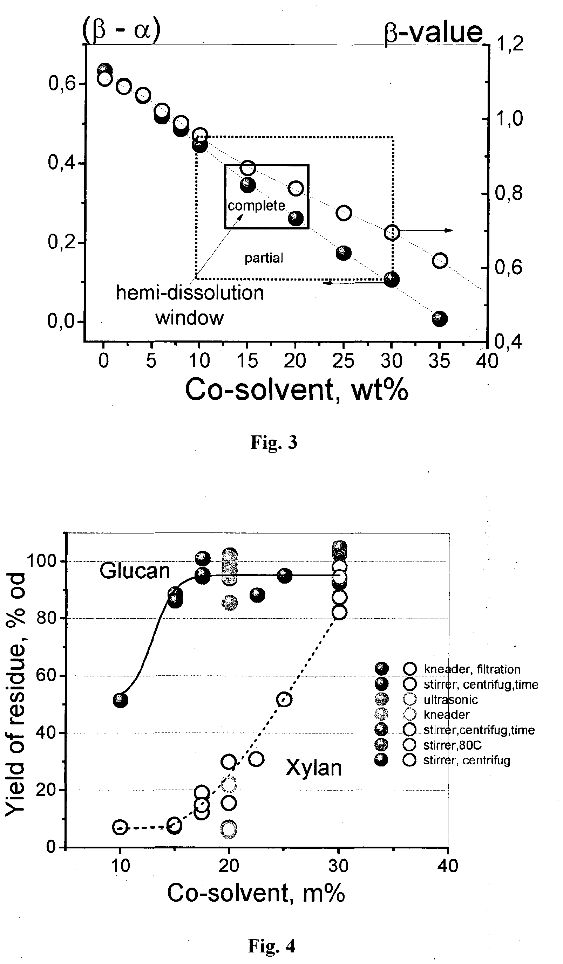

Quite recently, we introduced the net basicity term, β-α, which allows a better prediction of both dissolution and regeneration of cellulose since it accounts for the acidity imparted by the cation or a protic co-solvent [7]. Based on a representative selection of cellulose solvents it was shown that cellulose dissolution generally conform to the requirement 0.35 < β-α < 0.9 with β > 0.8 [7]. With the progressive addition of a protic co-solvent such as water or alcohol the H-bond basicity, β, decreases while the H-bond acidity, α, increases. This was demonstrated by adding water to [emim][OAc]. As shown in Figure 3, the net basicity decreases faster than the β-value due to the opposite development of the β- and α-values with increasing amount of water in [emim][OAc]. Further, Figure 3 reveals the ranges of the KT derived solubility parameters indicating complete and partial dissolution of hemicelluloses from paper-grade pulps.

As expected, the solubility of a hemicellulose-rich pulp decreases with an increasing percentage of water in an [emim][OAc]-water mixture when treated for three hours at about 60 °C in a vertical kneader.

Surprisingly, the extent of pulp dissolution decreases only gradually with increasing water concentration in [emim][OAc]. This was not expected since for some ionic liquids, e.g. for [bmim]Cl, the TMG-based ILs and others, it was known that the presence of only marginal amounts of water resulted in a complete stop of their capability to dissolve even fractions of a pulp [7][9]. The [emim][OAc]-water mixture, however, revealed high dissolution power even at relatively high water concentration. This was for example demonstrated for a bleached kraft pulp of which 60wt-%, 28wt-%, 20wt-%, 13wt-% and 1wt-% were dissolved in [emim][OAc]-water mixtures with a water content of 10 wt-%, 15wt-%, 20wt-%, 25wt-% and 30 wt-%, respectively. Beyond 30wt-% water in [emim][OAc]-water dissolution of any pulp component stops.

A closer examination confirmed that the extent of dissolution and thus the dissolution power of the solvent system were mainly related to the molar mass of the pulp components. Factors such as the pulp morphology, supramolecular structure, degree of crystallinity and chemical properties (e.g. affecting hydrophilicity) of the pulp components are likely to affect the solution behaviour as well. The removal of pure hemicellulose and hemicellulose fractions from paper pulp was, however, unforeseeable despite the expected molar mass dependent pulp fractionation behavior of the [emim][OAc]-water solvent. The solvent properties of appropriate [emim][OAc]-water mixtures were obviously more favourable for the extraction of hemicellulose than for cellulose of comparable molar mass.

The results shown in Figure 4 clearly indicate that xylan from a birch kraft pulp is most efficiently and selectively dissolved in [emim][OAc] containing 15-20 wt-% of water. Beside the water content of the solvent system, the efficiency and selectivity of hemicellulose dissolution were also affected by the dissolution conditions. This was demonstrated for a solvent mixture containing 20 wt-% of water. The results of different dissolution conditions for this particular water content of the solvent mixture are included in Figure 4. The detailed results are presented in Example 3.

Based on the above, dissolving cellulose pulps are provided, wherein the cellulose pulps have a residual hemicellulose content of 1.0 to 10 wt-%.

Thus, a dissolving cellulose pulp obtained by a method as explained in the foregoing, in which the isolated and purified hemicelluloses is withdrawn from a hemicellulose-rich source, exhibits a residual cellulose content between 1.0 and 10 wt-%, preferably between 2.0 and 5 wt-%, the cellulose and hemicellulose contents being calculated by the Janson formulae, and the neutral sugar contents are determined by HPAEC-PAD as described in reference [10].

The following non-limiting Examples illustrate the invention,

### Example 1

### Effect of the water content in [emim][OAc] on the fractionation of a commercial birch kraft pulp: Composition of the pulp residue

ECF-bleached birch kraft pulp was treated with an [emim] [OAc]-water mixture [10 wt-% to 30 wt-%] in a horizontal kneader for 3 h at 60 °C. The subsequent phase separation was conducted with a filter press equipped with a metal fleece. The pore diameter was in the range 1-5 µm. The pulp residue was thoroughly washed with water, dried and subjected to analysis. Alternatively, the dissolution was supported by a stirrer and the phase separation by centrifugation. The results are summarized in Table 1.

**Table 1: Effect of the water content in [emim][OAc] on the efficiency and selectivity of xylan removal. Characterization of the pulp residue.**

| Trial | H₂O, wt-% | Consistency, % | Conditions | Temp °C | Time h | Yield % | Xylan content % | Viscosity mL/g |
|---|---|---|---|---|---|---|---|---|
| Initial Birch Pulp | | | | | | 100.0 | 23.1 | 808 |
| trial 3 | 10 | 3.3 | kneader, filtration | 60 | 3 | 40.0 | 4.0 | 1040 |
| trial 1 | 15 | 3.3 | kneader, filtration | 60 | 3 | 64.7 | 2.5 | 981 |
| trial 167 | 17.5 | 3.3 | kneader, filtration | 60 | 3 | 76.1 | 3.9 | 954 |
| trial 164 | 20 | 3.3 | kneader, filtration | 60 | 3 | 76.2 | 6.8 | 921 |
| trial 5 | 22.5 | 3.3 | kneader, filtration | 60 | 3 | 90.0 | 9.6 | 886 |
| trial 2 | 25 | 3.3 | kneader, filtration | 60 | 3 | 86.1 | 14.6 | 891 |
| trial 4 | 30 | 3.3 | kneader, filtration | 60 | 3 | 98.8 | 21.4 | 808 |

### Example 2

### Effect of the water content in [emim] [OAc] on the fractionation of a commercial birch kraft pulp: Composition of the precipitated soluble fraction

The soluble fractions generated in Example 1 were precipitated by the addition of excess water (anti-solvent). The precipitated, extracted polysaccharides were centrifuged and washed thoroughly to remove the residual ionic liquid. The washed precipitates were dried at room temperature over night or, alternatively, by freeze drying. Table 2 shows the yield and the composition of the extracted low-molar mass pulp fractions.

**Table 2: Effect of the water content in [emim][OAc] on the yield and purity of the extracted pulp fraction. Characterization of the precipitate from the soluble fraction.**

| Trial | H₂O, wt-% | Consistency, % | Conditions | Temp °C | Time h | Yield % | Cellulose * content, % | Mw (GPC) Pullulan [kDa] |
|---|---|---|---|---|---|---|---|---|
| Initial Birch Pulp | | | | | | 0 | | |
| trial 3 | 10 | 3.3 | kneader, filtration | 60 | 3 | 60.0 | 50.5 | 609.1 |
| trial 1 | 15 | 3.3 | kneader, filtration | 60 | 3 | 35.3 | 3.7 | 23.4 |
| trial 167 | 17.5 | 3.3 | kneader, filtration | 60 | 3 | 23.9 | 2.8 | n.a. |
| trial 164 | 20 | 3.3 | kneader, filtration | 60 | 3 | 23.8 | n.a. | n.a. |
| trial 5 | 22.5 | 3.3 | kneader, filtration | 60 | 3 | 10.0 | 1.8 | 19.7 |
| trial 2 | 25 | 3.3 | kneader, filtration | 60 | 3 | 13.9 | 2.0 | 21.9 |
| trial 4 | 30 | 3.3 | kneader, filtration | 60 | 3 | 1.2 | 9.1 | 26.0 |

| | | | | | | | | |
|---|---|---|---|---|---|---|---|---|
| *calculated according to the Janson formulae [8] | | | | | | | | |

Table 2 shows that between a water content of 10 to 15 wt-% in [emim][OAc] the transition from cellulose/hemicellulose to pure hemicellulose extraction occurs. Thus, in the range between 15 wt-% and 25 wt-% of water basically only hemicellulose is extracted. Quantitative hemicellulose extraction is achieved in the range between 15 wt-% and 20wt-% of water content in [emim][OAc] at least.

### Example 3

### Effect of dissolution conditions at a constant water content of 20 wt-% in [emim] [OAc] on the fractionation efficiency and selectivity of a commercial birch kraft pulp

In a series of experiments, where the water content was kept constant at 20 wt-% in [emim][OAc], the effects of temperature, time and mixing conditions on the fractionation of a bleached birch kraft pulp have been determined (table 3).

**Table 3: Effect of temperature, time and mixing conditions at a water content of 20 wt-% in [emim][OAc] on the yield and purity of the pulp residue**

| Trial | H₂O, wt-% | Consistency, % | Conditions | Temp °C | Time h | Yield % | Xylan content % | Viscosity mL/g |
|---|---|---|---|---|---|---|---|---|
| Initial Birch Pulp | | | | | | 0 | | |
| trial 164 | 20 | 3.3 | kneader, filtration | 60 | 3 | 76.2 | 6.8 | 921 |
| trial 155 | 20 | 3.3 | **stirrer, centrifuge** | 60 | 3 | 81.3 | 6.2 | 906 |
| trial 157 | 20 | 3.3 | stirrer, centrifuge | 60 | **6** | 75.6 | 1.9 | n.a. |
| trial 159 | 20 | 3.3 | stirrer, filtration | **80** | 3 | 82.1 | 1.8 | 914 |
| trial 160 | 20 | 3.3 | stirrer, centrifuge | 60 | **0.5** | 78.7 | 8.5 | 907 |
| trial 161 | 20 | 3.3 | **ultrasonica tion** | 60 | 3 | 80.2 | 1.5 | 920 |
| trial 162 | 20 | 3.3 | ultrasonicat ion | 60 | **6** | 79.6 | 1.8 | n.a. |

The support through longer retention time, higher temperature and the concomitant application of ultrasonication revealed a clear impact on the yield and purity of the pulp residue.

High temperature (80°C, 3h) or moderate temperature combined with long dissolution time (60°C, 6 h) show significant better xylan dissolution efficiency as compared to standard conditions (60°C, 3h). Further, the support of dissolution by ultrasonication seems to improve the efficiency/selectivity of xylan removal significantly. The xylan content of the pulp residue decreases to only 1.5 to 1.8 % od, which fulfill the requirements for standard acetate grade pulps.

### Example 4

### Effect of pulp consistency in the solvent system [emim][OAc]-water on the fractionation efficiency and selectivity of a commercial birch kraft pulp.

Pulp consistency in a suspension or solution has an important impact on the economic feasibility of a process. Most experiments were conducted at a rather low consistency of 3.3 wt-% to facilitate the handling of the pulp-solvent system in the lab. The pulp consistency was increased to 10.5 wt-% in a separate experiment with bleached birch kraft pulp using [emim][OAc] with a water content of 15 wt-%. The results are compared with those achieved at a pulp consistency of only 3.3 wt-% in Table 4.

**Table 4: Effect of pulp consistency at a water content of 15 wt-% in [emim][OAc] on the yield and purity of the pulp residue**

| Trial | H₂O, wt-% | Consistency, % | Conditions | Temp °C | Time h | Yield % | Xylan content % | Viscosity mL/g |
|---|---|---|---|---|---|---|---|---|
| Initial Birch Pulp | | | | | | 0 | | |
| trial 1 | 15 | 3.3 | kneader, filtration | 60 | 3 | 64.7 | 2.5 | 981 |
| trial 6 | 15 | **10.5** | kneader, filtration | 60 | 3 | 73.1 | 2.7 | 969 |

Besides the yield of the residue, which was very difficult to determine, the performance at 10.5 wt-% consistency was comparable to that at 3.3 wt-% consistency (the yield of the former is more reliable considering mass balance). Evidence of the quantitative and highly selective fractionation of cellulose and hemicellulose from a hemicellulose-rich pulp has been provided by the comparative evaluation of the molar mass distributions of the initial pulp, the cellulose and hemicellulose fractions and their calculated sums. In this way it was shown that fractionation occurs in a highly selective and quantitative way. Thus, no degradation of cellulose or hemicellulose was observed as occurring during the conventional dissolving pulp processes.

### Example 5

### Effect of wood raw material: Birch vs. Pine kraft pulp

The fractionation performance of the solvent system [emim] [OAc]-water with a water content of 15 wt-% was investigated for a pine kraft pulp in comparison to a birch kraft pulp. The results are summarized in Table 5.

**Table 5: Effect of wood raw material of a paper grade kraft pulp on the yield and purity of the pulp residue. Treatment conditions: 85 wt-% [emim][OAc] +15 wt-% water, 60 °C, 3 h in a kneader, phase separation with a press filter**

| Trial | H₂O, Wt-% | Consistency, % | Temp °C | Time, h | Yield % | Cellulose, %* | Xylan %* | GGM %* | Viscosity mL/g |
|---|---|---|---|---|---|---|---|---|---|
| Initial birch pulp | | | | | 100.0 | 70.3 | 28.7 | 1.0 | 808 |
| treated birch pulp, trial 1 | 15 | 3.3 | 60 | 3 | 64.7 | 96.7 | 3.3 | 0.0 | 981 |
| Initial pine pulp | | | | | 100.0 | 82.3 | 9.7 | 8.0 | 832 |
| treated pine pulp, trial 7 | 15 | 3.3 | 60 | 3 | 77.5 | 96.2 | 1.5 | 2.3 | 932 |

| | | | | | | | | | |
|---|---|---|---|---|---|---|---|---|---|
| *calculated according to the Janson formulae [8] | | | | | | | | | |

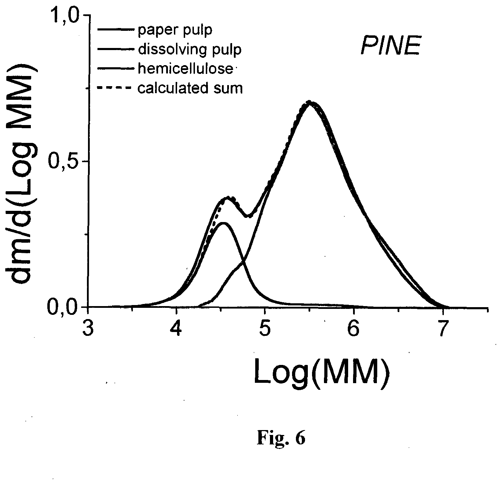

The successful separation of cellulose and hemicelluloses from a pine kraft pulp is also reflected in their molar mass distributions (Figure 6). From the results it can be concluded that softwood and hardwood kraft pulps are equally suited as substrate for the quantitative separation of hemicellulose and cellulose by applying the process according to the present invention.

### Industrial Applicability

Examples 1-5 confirm the viability of the novel fractionation concept of hemicellulose-rich pulps (holocellulose, paper-grade pulps) using an IL-co-solvent mixture with suitable solvent parameters as expressed by the KT-parameters and appropriate dissolution conditions (Figure 3).

With reference to work on the dissolution of cellulose [7] conditions can now be proposed allowing the complete and partial dissolution of hemicelluloses from hemicellulose-rich polysaccharides, preferred from bleached paper grade pulps.

Figure 3 shows the solubility window for the complete (β-α = 0.24 - 0.39; β = 0.70 - 0.88) and the complete and partial (β-α = 0.11 - 0.47; β = 0.57 - 0.95) dissolution of hemicelluloses.

The appropriate solvent properties have been conveniently adjusted by the addition of water to [emim][OAc]. However, the fractionation concept can be successfully transferred to any cellulose solvent-co-solvent mixture provided that the solubility parameters fulfil the requirements as defined for the hemicellulose dissolution window (complete and partial).

Different to conventional and novel fractionation schemes for the manufacture of dissolving pulp using chemical reactions, the proposed invention allows a quantitative separation of hemicelluloses and cellulose of high purity without any losses and the depolymerisation of the associated polymers.

Supporting the extraction by high intensity mixing at elevated temperature promotes the fractionation efficiency and selectivity as exemplified in Table 3.

Quantitative separation of cellulose and hemicellulose of hemicellulose-rich pulps or holocellulose, is embedded in a new process concept, IONCELL, which, as a first step, comprises the separation of the hemicellulose from the original hemicellulose-rich substrate. Step 2 of the IONCELL process is characterized by the separation of the dissolved hemicellulose after phase separation. The separation is preferentially conducted by membrane separation to avoid any further dilution of the solvent (e.g. ionic liquid).

Alternatively, the addition of a non-solvent, preferably equivalent to the co-solvent (e.g. water), is added to the solution to precipitate the hemicellulose (Figure 1). An appropriate filtration of the generated hemicellulose/solvent/co-solvent suspension ensures a quantitative phase separation. The filtrated hemicellulose is washed and dried while the solvent/non-solvent mixture is recycled to the fractionation process after the co-solvent content has been adjusted to the desired value.

In a third step, the purified cellulose fraction is dissolved in a cellulose solvent, e.g. ionic liquid, recycled either from the conversion (fibre, film) or from the fractionation process. The dope may be further treated by oxidants (bleaching chemicals like hydrogen peroxide, ozone and others) to remove impurities (bleaching) in the case of an unbleached pulp as initial substrate and/or to adjust the degree of polymerization as requested by subsequent forming and regeneration processes. Those processes comprise primarily the production of regenerated fibers and films.

### Citation List

### Non Patent Literature

1) M. J. Kamlet, J. L. M. Abboud, M. H. Abraham and R. W. Taft, J. Org. Chem., 1983, 48,2877
2) T. V. Doherty, M. Mora-Pale, S. E. Foley, R. J. Linhardt and J. S. Dordick, Green Chem., 2010, 12, 1967
3) R. Rinaldi, Chem. Commun., 2011, 47, 511.
4) Hatfield and R. S. Fukushima, Crop Sci., 2005, 45, 832.
5) Y. Fukaya, K. Hayashi, M. Wada and H. Ohno, Green Chem., 2008, 10, 44-46
6) Y. Fukaya, A. Sugimoto and H. Ohno, Biomacromolecules, 2006, 7, 3295-3297
7) L.K.J. Hauru et al. submitted to Biomacromolecules, 2012
8) J. Janson, Faserforschung und Textiltechnik, 1974, 25 (9),375-382
9) M. Hummel et al. Green Chemistry, 2011, 13, 2507-2517
10) H. Sixta et al. In: Proceedings of 11 th International Symposium on Wood and Pulping Chemistry, 2001, 11-14 June, Nice, France. 659-662.

## Claims

1. A method of separating hemicellulose and cellulose by dissolution of hemicellulose from a hemicellulose-rich source, such as a pulp of any origin or from holocellulose, **characterized in that** hemicellulose is dissolved in a solvent system comprising a cellulose solvent, which is either a ionic liquid or another direct cellulose solvent, and a molecular solvent (co-solvent), wherein said co-solvent does not dissolve cellulose, and wherein the solvent basicity and acidity of said ionic liquid or other direct cellulose solvent are adequately adjusted by the co-solvent.

2. The method according to claim 1, **characterized in that** hemicellulose is dissolved in a solvent system comprising a ionic liquid and a molecular solvent (co-solvent), wherein said co-solvent does not dissolve cellulose and wherein the solvent basicity and acidity of said ionic liquid are adequately adjusted by the co-solvent.

3. The method according to claim 1 or 2, wherein the solvent basicity and acidity are **characterized by** the Kamlet-Taft solubility parameters, particularly by the β- (H-bond basicity) and α- (H-bond acidity) values.

4. The method according to claim 1, 2 or 3, wherein said co-solvent is miscible with the ionic liquid, and optionallysaid co-solvent is capable of lowering the β-value and/or raising the α-value of the solvent system.

5. The method according to any of the preceding claims, wherein
i) the ionic liquid is a direct cellulose solvent, which preferably has
- a cation selected from the group of cationic moieties depicted in Figure 2, wherein the residues R₁₋₅ are independently linear or branched alkyl- (typically C1-C6), alkoxy-, or alkoxyalkyl groups, residues containing aryl moieties, or hydrogen, and
- an anion selected from the group consisting of halides (fluoride, chloride, bromide and iodide), pseudohalides (cyanide, thiocyanide, cyanate), carboxylates (formate, acetate, propionate, butyrate), alkyl sulphite, alkyl sulphate, trifluoromethane sulfonate, phenyl sulfonate, dialkyl phosphite, dialkyl phosphate, dialkyl phosphonites, and dialkyl phosphonates,
or
ii) the ionic liquid is replaced by NMMO.H₂O or LiCl/DMAc.

6. The method according to any of the preceding claims, **characterized in that** the co-solvent is selected from the group consisting of water, methanol, ethanol, propanol, iso-propanol, butanol, acetone, acetonitrile, dimethylsulfoxide, dimethylformamide, dimethylacetamide and dimethylimidazolidione, preferably the co-solvent is water or ethanol, or the co-solvent comprises another ionic liquid which itself is not capable of dissolving cellulose, so that this co-solvent-IL -mixture consists of an aforementioned cation and any anion not mentioned above, preferably of the type hexafluorophosphate, tetrafluoroborate, bis(trifluoromethane)sulfonimide.

7. The method according to any of the preceding claims, **characterized in that** the ionic solvent has a net basicity (β-α) in the range 0.11-0.47; and a β-value in the range 0.57-0.95; preferably a net basicity (β-α) in the range 0.24-0.39; and a β-value in the range 0.70-0.88.

8. The method according to any of any of the preceding claims, wherein the ionic liquid is an [emim]-based ionic liquid.

9. The method according to any of any of the preceding claims, wherein the ionic liquid is [emim][OAc], [bmim][OAc], [emim][DMP], [DEP], [DBNH] [OAc], [DBNH] [EtOAc], preferably [emim]OAc, or [emim][DMP], the co-solvent is water or an alcohol, preferably water, wherein the water content preferably is in the range 10-30 wt-%, and the solvent has a net basicity (β-α) in the range 0.11-0.47; and a β-value in the range 0.57-0.95; preferably a net basicity (β-α) in the range 0.24-0.39; and a β-value in the range 0.70-0.88.

10. The method according to any of the preceding claims, wherein the method is carried out at a temperature ranging from 20-150 °C, preferably 40-80 °C for a time ranging from 10-400 min, preferably 60-180 min, and preferably at a pulp consistency of 1-25 wt-%, in particular 5-15 wt-%.

11. The method according to any of the preceding claims, wherein the hemicellulose-rich pulp used as starting material is bleached or unbleached paper pulp of any lignocellulosic raw material derived from any commercial (sulphite, kraft, Soda-AQ) or non-commercial processes, such as organosolv, carboxylic acid, ASAM, ASA or MEA.

12. The method according to any of the preceding claims, wherein the dissolved hemicellulose fraction is regenerated by the addition of a non-solvent, preferably water or alcohol, and the precipitate is separated by filtration or centrifugation.

13. The method according to any of the preceding claims, wherein
- the dissolved hemicellulose fraction is separated by pressure driven membrane processes, and/or
- a non-solvent is added to the hemicellulose-enriched retentate to initiate precipitation of the hemicellulose, and
- the hemicellulose is recovered as a pure powder after washing and drying.

14. The method according to any of the preceding claims, wherein
- the final cellulose product obtained has a residual hemicellulose content of 1.0 to 10 wt-%, preferably between 2.0 and 5.0 wt-%, and
- the isolated and purified hemicellulose has a residual cellulose content between 1.0 and 10 w-t%, preferably between 2.0 and 5 wt-%,
wherein the cellulose and hemicellulose contents are calculated by the Janson formulae, and the neutral sugar contents are determined by HPAEC-PAD as described in reference [10].

15. The method according to any of the preceding claims, wherein the cellulose-rich residue is dissolved in a cellulose solvent as mentioned above.

16. The method according to any of the preceding claims, wherein oxidants or acids are added to the cellulose dope to adjust the degree of polymerization suitable for the subsequent forming and regeneration processes, and/or oxidants are added to the cellulose dope to remove chromophores such as residual lignin, HexA and extractives prior to the conversion processes.

17. The method according to claim 14 or 15, wherein the treated cellulose dope is subjected to filtration to remove undissolved impurities.

## Patentansprüche

1. Ein Verfahren zur Trennung von Hemicellulose und Cellulose durch Lösung von Hemicellulose aus einer Hemicellulose-reichen Quelle, wie zum Beispiel Zellstoff von jeglicher Herkunft oder von Holocellulose, **dadurch gekennzeichnet dass** Hemicellulose in einem Lösungsmittelsystem gelöst ist, das ein Cellulose-Lösungsmittel umfasst, das entweder eine ionische Flüssigkeit oder ein anderes direktes Cellulose-Lösungsmittel ist, und ein molekulares Lösungsmittel (Zusatzlösungsmittel), wobei das Zusatzlösungsmittel die Cellulose nicht löst, und wobei die Lösungsmittelbasizität und -azidität der ionischen Flüssigkeit oder des anderen direkten Cellulose-Lösungsmittels durch das Zusatzlösungsmittel angemessen angepasst sind.

2. Das Verfahren gemäß Anspruch 1, **dadurch gekennzeichnet dass** Hemicellulose in einem Lösungsmittelsystem gelöst ist, umfassend eine ionische Flüssigkeit und ein molekulares Lösungsmittel (Zusatzlösungsmittel), wobei das Zusatzlösungsmittel Cellulose nicht löst und wobei die Lösungsmittelbasizität und -azidität der ionischen Flüssigkeit durch das Zusatzlösungsmittel angemessen angepasst sind.

3. Das Verfahren gemäß Anspruch 1 oder 2, wobei die Lösungsmittelbasizität und -azidität durch die Kamlet-Taft Löslichkeitsparameter gekennzeichnet sind, insbesondere durch die β-(H-Bindungsbasizität) und α-(H-Bindungsazidität)-Werte.

4. Das Verfahren gemäß Anspruch 1, 2 oder 3, wobei das Zusatzlösungsmittel mit der ionischen Flüssigkeit mischbar ist, und das Zusatzlösungsmittel optional fähig ist den β-Wert zu senken und/oder den α-Wert des Lösungsmittelsystems anzuheben.

5. Das Verfahren gemäß einem der vorangehenden Ansprüche, wobei
(i) die ionische Flüssigkeit ein direktes Cellulose-Lösungsmittel ist, welches vorzugsweise
- ein Kation ausgewählt aus der Gruppe von kationischen Gruppen dargestellt in Figur 2 ist, wobei die Reste R₁₋₅ unabhängig linear oder verzweigt Alkyl-(typischerweise C1-C6), Alkoxy-, oder Alkoxyalkyl-Gruppen, Reste beinhaltend Arylkomponenten, oder Wasserstoff sind, und
- ein Anion ausgewählt aus der Gruppe bestehend aus Haliden (Fluorid, Chlorid, Bromid und Iodid), Pseudohaliden (Cyanid, Thiocyanid, Cyanat), Carboxylate (Format, Acetat, Propionat, Butyrat), Alkylsulfit, Alkylsulfat, Trifluoromethansulfonat, Phenylsulfonat, Dialkylphosphit, Dialkylphosphat, Dialkylphosphonit, und Dialkylphosphonat, ist,
oder
(ii) die ionische Flüssigkeit durch NMMO.H₂O oder LiC1/DMAc ersetzt ist.

6. Das Verfahren gemäß einem der vorhergehenden Ansprüche, **dadurch gekennzeichnet dass** das Zusatzlösungsmittel ausgewählt ist aus der Gruppe bestehend aus Wasser, Methanol, Ethanol, Propanol, Isopropanol, Butanol, Aceton, Acetonitril, Dimethylsulfoxid, Dimethylformamid, Dimethylacetamid und Dimethylimidazolidion, vorzugsweise ist das Zusatzlösungsmittel Wasser oder Ethanol, oder das Zusatzlösungsmittel umfasst eine andere ionische Flüssigkeit, die an sich nicht fähig ist Cellulose zu lösen, so dass die Zusatzlösungsmittel-IL-Mischung aus einem vorhergenannten Kation und einem nicht oben genannten Anion, vorzugsweise des Typs Hexafluorophosphat, Tetrafluoroborat, Bis(trifluoromethan)sulfonimid, besteht.

7. Das Verfahren gemäß einem der vorhergehenden Ansprüche, **dadurch gekennzeichnet dass** die ionische Flüssigkeit eine netto Basizität (β-α) im Bereich 0.11-0.47; und einen β-Wert im Bereich 0.57-0.95, vorzugsweise eine netto Basizität (β-α) im Bereich 0.24-0.39; und einen β-Wert im Bereich 0.7-0.88, hat.

8. Das Verfahren gemäß einem der vorhergehenden Ansprüche, wobei die ionische Flüssigkeit eine [enim]-basierte ionische Flüssigkeit ist.

9. Das Verfahren gemäß einem der vorhergehenden Ansprüche, wobei die ionische Flüssigkeit [emim][OAc], [bmim][OAc], [emim][DMP], [DEP], [DBNH][OAc], [DBNH][EtOAc] ist, vorzugsweise [emim]OAc oder [emim][DMP], das Zusatzlösungsmittel Wasser oder ein Alkohol ist, vorzugsweise Wasser, wobei der Wassergehalt vorzugsweise im Bereich 10-30 Gewichts-% liegt, und das Lösungsmittel eine netto Basizität (β-α) im Bereich 0.11-0.47; und einen β-Wert im Bereich 0.57-0.95; vorzugsweise eine netto Basizität (β-α) im Bereich 0.24-0.39; und einen β-Wert im Bereich 0.7-0.88, hat.

10. Das Verfahren gemäß einem der vorhergehenden Ansprüche, wobei das Verfahren durchgeführt wird bei einer Temperatur im Bereich, die von 20-150 °C liegt, vorzugsweise 40-80 °C für eine Zeit im Bereich, die von 10-400 min liegt, vorzugsweise 60-180 min, und vorzugsweise bei einer Zellstoffkonsistenz von 1-25 Gewichts-%, im Besonderen 5-15 Gewichts-%.

11. Das Verfahren gemäß einem der vorhergehenden Ansprüche, wobei der Hemicellulosereiche Zellstoff, der als Startmaterial verwendet wird, gebleichter oder ungebleichter Papierzellstoff von einem lignocellulosischen Rohmaterial ist, das von einem kommerziellen (Sulfit, Kraft, Soda-AQ) oder nichtkommerziellem Prozess, wie zum Beispiel Organosolv, Carboxylsäure, ASAM, ASA oder MEA, stammt.

12. Das Verfahren gemäß einem der vorhergehenden Ansprüche, wobei die gelöste Hemicellulose-Fraktion durch die Zugabe eines Nicht-Lösungsmittels, vorzugsweise Wassers oder Alkohols, regeneriert ist und das Fällungsprodukt durch Filtration oder Zentrifugieren abgetrennt ist.

13. Das Verfahren gemäß einem der vorhergehenden Ansprüche, wobei
- die gelöste Hemicellulose-Fraktion durch druckgetriebene Membranverfahren abgetrennt ist, und/oder
- ein Nicht-Lösungsmittel zu dem Hemicellulose-angereicherten Retentat hinzugefügt ist, um Ausfällung der Hemicellulose zu initiieren, und
- die Hemicellulose als reines Pulver nach Waschen und Trocknen rückgewonnen wird.

14. Das Verfahren gemäß einem der vorhergehenden Ansprüche, wobei
- das endgültig erhaltene Celluloseprodukt einen restlichen Hemicellulosegehalt von 1,0 bis 10 Gewichts-%, vorzugsweise zwischen 2,0 und 5,0 Gewichts-%, hat, und
- die isolierte und gereinigte Hemicellulose einen restlichen Cellulosegehalt zwischen 1,0 und 10 Gewichts-%, vorzugsweise zwischen 2,0 und 5 Gewichts-% hat,
wobei die Cellulose- und Hemicellulosegehalte durch die Janson Formeln berechnet werden, und die neutralen Zuckergehalte durch HPAEC-PAD, wie in Referenz [10] beschrieben, bestimmt sind.

15. Das Verfahren gemäß einem der vorhergehenden Ansprüche, wobei der Cellulose-reiche Rückstand in einem Cellulose-Lösungsmittel, wie oben genannt, gelöst ist.

16. Das Verfahren gemäß einem der vorhergehenden Ansprüche, wobei Oxidationsmittel oder Säuren zu dem Zelluloseadditiv hinzugefügt sind, um den Polymerisierungsgrad geeignet für die nachfolgenden Bildungs- und Regenerationsverfahren anzupassen, und/oder Oxidationsmittel dem Celluloseadditiv hinzugefügt sind, um Chromophore, wie zum Beispiel restliches Lignin, HexA und Extrakte, vor den Umsetzungsverfahren zu entfernen.

17. Das Verfahren gemäß Anspruch 14 oder 15, wobei das behandelte Celluloseadditiv Filtration ausgesetzt ist, um ungelöste Unreinheiten zu entfernen.

## Revendications

1. Procédé de séparation d'hémicellulose et de cellulose par dissolution d'hémicellulose à partir d'une source riche en hémicellulose, telle qu'une pâte de toute origine ou à partir d'holocellulose, **caractérisé en ce que** l'hémicellulose est dissoute dans un système de solvant comprenant un solvant de cellulose, qui est soit un liquide ionique soit un autre solvant de cellulose direct, et un solvant moléculaire (co-solvant), dans lequel ledit co-solvant ne dissout pas la cellulose, et dans lequel la basicité de solvant et l'acidité dudit liquide ionique ou autre solvant de cellulose direct sont ajustées de façon adéquate par le co-solvant.

2. Procédé selon la revendication 1, **caractérisé en ce que** l'hémicellulose est dissoute dans un système de solvant comprenant un liquide ionique et un solvant moléculaire (co-solvant), dans lequel ledit co-solvant ne dissout pas la cellulose et dans lequel la basicité de solvant et l'acidité dudit liquide ionique sont ajustées de façon adéquate par le co-solvant.

3. Procédé selon la revendication 1 ou 2, dans lequel la basicité de solvant et l'acidité sont **caractérisées par** les paramètres de solubilité Kamlet-Taft, en particulier par les valeurs β-(basicité de liaison H) et α-(acidité de liaison H).

4. Procédé selon la revendication 1, 2 ou 3, dans lequel ledit co-solvant est miscible avec le liquide ionique, et facultativement ledit co-solvant est capable de diminuer la valeur β et/ou d'augmenter la valeur α du système de solvant.

5. Procédé selon l'une quelconque des revendications précédentes, dans lequel
i) le liquide ionique est un solvant de cellulose direct, qui a de préférence
- un cation choisi dans le groupe de fragments cationiques représentés sur la figure 2, dans lequel les résidus R_{1 à 5} sont indépendamment des groupes alkyle-(typiquement C1 à C6), alcoxy- ou alcoxyalkyle linéaires ou ramifiés, des résidus contenant des fragments aryle, ou l'hydrogène, et
- un anion choisi dans le groupe constitué d'halogénures (fluorure, chlorure, bromure, et iodure), de pseudohalogénures (cyanure, thiocyanure, cyanate), de carboxylates (formiate, acétate, propionate, butyrate), d'alkyl sulfite, d'alkyl sulfate, de trifluorométhane sulfonate, de phényl sulfonate, de phosphite de dialkyle, de phosphate de dialkyle, de phosphonites de dialkyle et de phosphonates de dialkyle,
ou
ii) le liquide ionique est remplacé par NMMO.H₂O ou LiCI/DMAc.

6. Procédé selon l'une quelconque des revendications précédentes, **caractérisé en ce que** le co-solvant est choisi dans le groupe constitué de l'eau, du méthanol, de l'éthanol, du propanol, de l'isopropanol, du butanol, de l'acétone, de l'acétonitrile, du diméthylsulfoxyde, du diméthylformamide, du diméthylacétamide et de la diméthylimidazolidione, de préférence le co-solvant est de l'eau ou de l'éthanol, ou le co-solvant comprend un autre liquide ionique qui lui-même n'est pas capable de dissoudre la cellulose, de sorte que ce mélange co-solvant-IL soit constitué d'un cation mentionné ci-dessus et de tout anion non mentionné ci-dessus, de préférence du type hexafluorophosphate, tétrafluoroborate, bis(trifluorométhane)sulfonimide.

7. Procédé selon l'une quelconque des revendications précédentes, **caractérisé en ce que** le solvant ionique a une basicité nette (β-α) dans la plage de 0,11 à 0,47 ; et une valeur β dans la plage de 0,57 à 0,95 ; de préférence une basicité nette (β-α) dans la plage de 0,24 à 0,39 ; et une valeur β dans la plage de 0,70 à 0,88.

8. Procédé selon l'une quelconque des revendications précédentes, dans lequel le liquide ionique est un liquide ionique à base d'[emim].

9. Procédé selon l'une quelconque des revendications précédentes, dans lequel le liquide ionique est [emim][OAc], [bmim][OAc], [emim][DMP], [DEP], [DBNH][OAc], [DBNH][EtOAc], de préférence [emim]OAc, ou [emim][DMP], le co-solvant est de l'eau ou un alcool, de préférence de l'eau, dans lequel la teneur en eau est de préférence dans la plage de 10 à 30 % en poids, et le solvant a une basicité nette (β-α) dans la plage de 0,11 à 0,47 ; et une valeur β dans la plage de 0,57 à 0,95 ; de préférence une basicité nette (β-α) dans la plage de 0,24 à 0,39 ; et une valeur β dans la plage de 0,70 à 0,88.

10. Procédé selon l'une quelconque des revendications précédentes, dans lequel le procédé est réalisé à une température allant de 20 à 150°C, de préférence de 40 à 80°C pendant une durée allant de 10 à 400 min, de préférence 60 à 180 min, et de préférence à une consistance de pâte de 1 à 25 % en poids, en particulier de 5 à 15 % en poids.

11. Procédé selon l'une quelconque des revendications précédentes, dans lequel la pâte riche en hémicellulose utilisée en tant que matériau de départ est une pâte à papier blanchie ou non blanchie de tout matériau brut lignocellulosique dérivé de tout processus commercial (sulfite, kraft, Soda-AQ) ou non commercial, tel que l'organosolv, l'acide carboxylique, ASAM, ASA ou MEA.

12. Procédé selon l'une quelconque des revendications précédentes, dans lequel la fraction d'hémicellulose dissoute est régénérée par l'ajout d'un non-solvant, de préférence de l'eau ou un alcool, et le précipité est séparé par filtration ou centrifugation.

13. Procédé selon l'une quelconque des revendications précédentes, dans lequel
- la fraction d'hémicellulose dissoute est séparée par des processus de séparation par membrane, et/ou
- un non-solvant est ajouté au rétentat enrichi en hémicellulose pour lancer la précipitation de l'hémicellulose, et
- l'hémicellulose est récupérée sous forme de poudre pure après lavage et séchage.

14. Procédé selon l'une quelconque des revendications précédentes, dans lequel
- le produit de cellulose final obtenu a une teneur en hémicellulose résiduelle de 1,0 à 10 % en poids, de préférence entre 2,0 et 5,0 % en poids, et
- l'hémicellulose isolée et purifiée a une teneur en cellulose résiduelle entre 1,0 et 10 % en poids, de préférence entre 2,0 et 5 % en poids,
dans lequel les teneurs en cellulose et hémicellulose sont calculées par les formules de Janson, et les teneurs en sucre neutre sont déterminées par HPAEC-PAD comme décrit à la référence [10].

15. Procédé selon l'une quelconque des revendications précédentes, dans lequel le résidu riche en cellulose est dissous dans un solvant de cellulose comme mentionné ci-dessus.

16. Procédé selon l'une quelconque des revendications précédentes, dans lequel des oxydants ou des acides sont ajoutés au dope de cellulose pour ajuster le degré de polymérisation approprié pour les processus de formation et de régénération ultérieurs, et/ou des oxydants sont ajoutés au dope de cellulose pour éliminer des chromophores tels que la lignine résiduelle, HexA et des produits d'extraction du bois avant les processus de conversion.

17. Procédé selon la revendication 14 ou 15, dans lequel le dope de cellulose traité est soumis à une filtration pour éliminer les impuretés non dissoutes.
